# EUROPEAN PATENT SPECIFICATION

(11) **EP 1 217 855 B1**
(45) Date of publication and mention of the grant of the patent: **22.03.2006**
(21) Application number: 00311663.9
(22) Date of filing: 22.12.2000
(51) Int. Cl.: H04Q 7/38, H04Q 7/30

(54) **Prioritizing paging messages in a radio network controller**
Prioritätssetzung von Funkrufnachrichten in einer Funkübertragungsnetzwerksteuerung
Etablissement de priorité des messages d'appel radio dans un contrôleur de réseau radio

(43) Date of publication of application: 26.06.2002
(73) Proprietor: LUCENT TECHNOLOGIES INC., Murray Hill, New Jersey 07974-0636 (US)
(72) Inventor: Miah, Babul, London SW9 OUG (GB); Roberts, Michael, Neuilly sur Seine 92200 (FR); Tatesh, Said, Swindon, Wiltshire SN5 9SQ (GB)
(74) Representative: Sarup, David Alexander

(56) References cited:
- WO-A-00/54521
- WO-A-99/57935
- GB-A- 2 355 623
- US-A- 5 533 094

## Description

The present invention relates to radio network controllers (RNCs) and, in particular, but not exclusively, to RNCs used in third generation (G3) networks for example universal mobile telecommunications systems (UMTS).

In a mobile telephone network, a mobile station (UE) will move from one cell zone to another. Since adjacent cell zones overlap, the mobile phone will at times be located simultaneously in two cell zones. Each cell zone has its own transmitter/receiver connected to a node B which in turn is connected to a corresponding RNC. The RNCs of adjacent zones are linked. Each RNC is connected to a mobile switching centre (MSC) and/or servicing GPRS (general packet radio system) support node (SGSN) within a core network.

When a mobile phone or unit is located wholly in one zone, its corresponding RNC will control the mobile unit and continue to control the mobile unit during its transition from one cell zone to another through an overlap between two cell zones via a corresponding node B and at an appropriate point will hand over control of the mobile phone to the RNC corresponding to the new cell zone.

During this period, the controlling RNC may also be known as the servicing RNC and the RNC in the adjacent zone is known as the drift RNC.

The servicing RNC will receive and transmit signals from and to the mobile phone unit directly through its corresponding node B or through the drift RNC and will communicate with the mobile phone either through its corresponding node B or through the drift RNC and its corresponding node B depending upon pre-programmed criteria such as a signal strength and/or error rate change from one route to the other as the situation varies.

The servicing RNC also carries out the function of paging the mobile phone.

There are generally three main reasons for paging the mobile phone, namely:
(1) core network initiated paging;
(2) signalling related paging; and
(3) packet related paging.

With core networks initiated paging, the servicing RNC deconstructs the paging message and reconstructs it for onward transmission to the mobile phone.

With signalling related paging, the servicing RNC responds to a transmission from the MSC to construct its own signal related paging message, while with packet related paging, the servicing RNC responds to a transmission from the MSC to construct its own signal related paging message.

Because the servicing RNC constructs all three types of paging messages, it knows the importance of each and so can be programmed to prioritize the paging messages in a particular order. However, once these paging messages are forwarded to the drift RNC, the drift RNC cannot prioritize between at least the signal related paging message and the packet related paging message since it was not party to the construction process.

It is an object of the invention to provide an improved RNC.

It is known from International Patent Application WO99/57935 to provide a radio network controller (RNC) for a third generation (G3) telecommunication network comprising a paging message construction unit which when the RNC acts as a servicing RNC acts to construct or reconstruct paging messages in response to paging signals or data received at a first input from a core network. It is known from International Patent Application WO 01/30103 which was published on 26 April 2001, the filing date of the present application, to provide a third generation telecommunication network having a plurality of radio network controllers. The servicing radio network controller allocates priorities to packets to be transmitted on a Forward Access Channel (FACH), includes these priorities in a packet header and sends these packets to a drift radio network controller, that adds the packets to queues according to the priorities.

According to the invention there is provided a radio network controller (RNC) for a third generation (G3) telecommunication network comprising a paging message construction unit which when the RNC acts as a servicing RNC acts to construct or reconstruct paging messages in response to paging signals or data received at a first input from a core network, characterised by means for scheduling or prioritizing the paging messages received from the construction unit and supplying them to a buffer unit for onward transmission to a first output in the scheduled or prioritised order, paging header generator means for supplying a header to the paging messages constructed by the paging message construction unit indicative of the type or priority of the accompanying paging message and feeding it to a second output for onward transmission to a drift RNC, and reading means operative when the RNC acts as a drift RNC to respond to signals received at a second input from a servicing RNC to read the headers of the paging messages and to direct the accompanying paging message to the buffer unit for onward transmission to the first output in the prioritized or scheduled order.

A radio network controller embodying the present invention, will now be described by way of example, with reference to the accompanying drawings, in which:
Figure 1 is a block diagram of part of a mobile unit system; and
Figure 2 is a block diagram of one of the two RNCs used in the system of Figure 1; the other being similar.

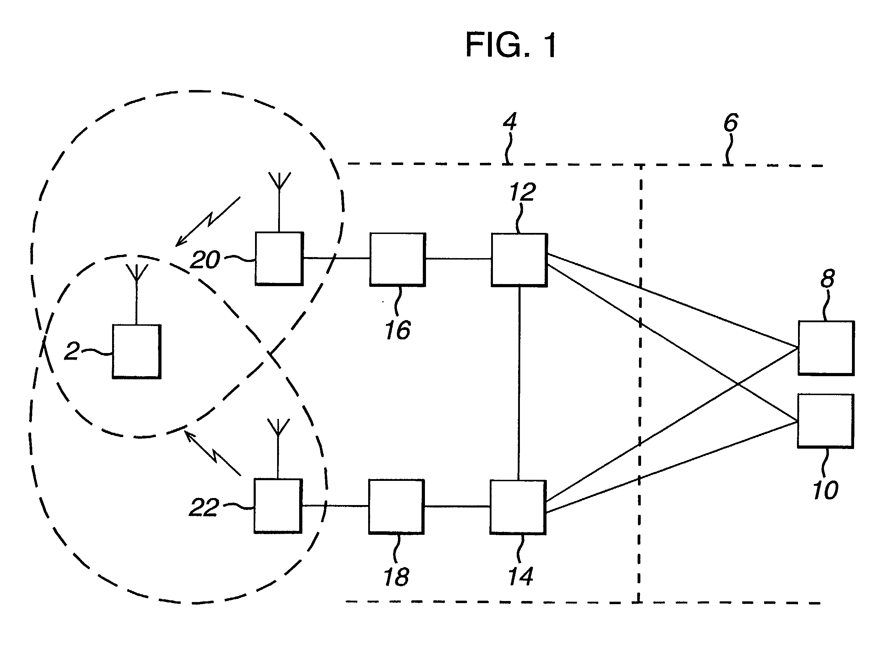

The mobile telephone system shown in Figure 1 includes a mobile unit station 2, a UTRAN 4 and a core network 6. The core network 6 links the UTRAN 4 to other similar UTRANs and to the terrestrial telephone network (not shown).

The core network 6 includes a mobile switching centre (MSC) 8 and a servicing GPRS support note 10 which both serve the UTRAN 4. The UTRAN 4 includes a plurality of RNCs 12 and 14 (only two shown). Each RNC 12, 14 is coupled to a respective node B 16, 18 and each node B 16, 18 is connected to a respective transmitter/receiver 20 and 22 which can communicate with the mobile station 2. The RNCs 12 and 14 are interlinked and communicate with one another when both are in communication with the same mobile phone ie when the mobile phone is located in the overlap between two zones.

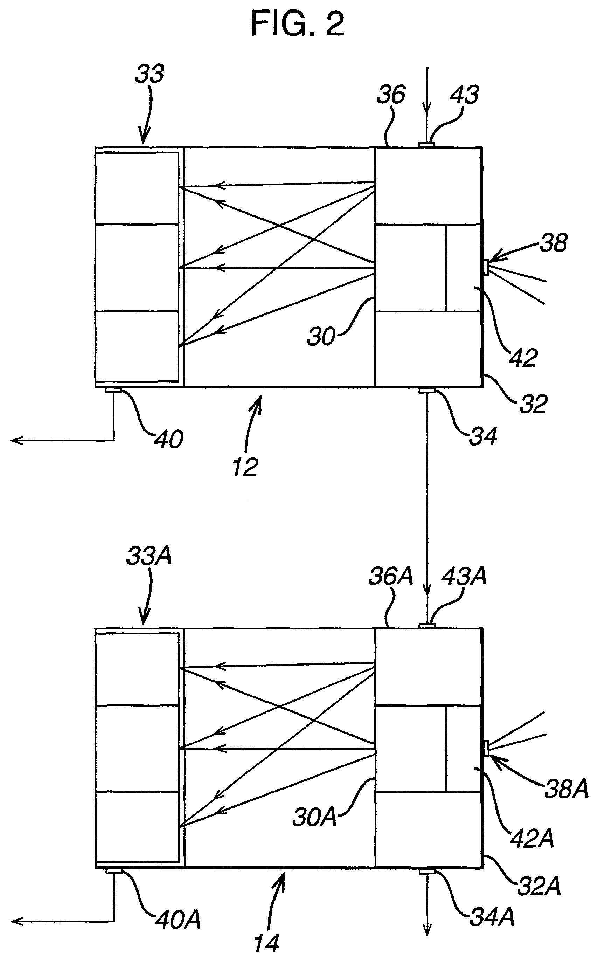

Each RNC 12, as shown in Figure 2, includes a paging message construction unit 42 having an input 38 connected to the MSC 6 and SGSN 8 and a decision unit 30 which acts to schedule and broadcast the different types of paging messages which it receives from the construction unit 42 in accordance with predetermined criteria pre-programmed into the RNC 12. The RNC 12 also has a buffer unit 33 for storing the paging messages in the selected order. The buffer unit 33 has an output 40 connected to the node B 16. A paging header generating unit 32 generates a header for each paging message which it receives from the construction unit 42 that is to be transmitted via an output terminal 34 to a drift RNC 14 when the drift RNC 14 is used to page the mobile station 2. Components in the drift RNC 14, similar to those in the servicing RNC 12, are similarly referenced but with the suffix A.

The RNC 14 has a reader unit 36A which when the RNC 14 acts as a drift RNC, receives at an input 43 paging signals from the servicing RNC 12. The RNC 12 has a similar reader unit 36 which receives signals from another servicing RNC when the RNC 12 acts as the drift RNC. The reader unit 36 reads the headers of the paging messages and depending upon the priority information contained in the header, may or may not by-pass the decision unit 30 to feed the paging messages directly into the buffer unit 33 in accordance with the schedules selected by the servicing RNC under which it operates.

It will be appreciated that the structure of each RNC 12 and 14 shown in Figure 2 may be either in hardware form or software form.

## Claims

1. A radio network controller hereinafter designated as RNC, (12, 14) for a third generation telecommunication network comprising a paging message construction unit (42; 42A) which when the RNC (12, 14) acts as a servicing RNC acts to construct or reconstruct paging messages in response to paging signals or data received at a first input (38; 38A) from a core network (6), **characterised by** means (30, 30A) for scheduling or prioritizing the paging messages received from the construction unit (42; 42A) and supplying them to a buffer unit (33; 33A) for onward transmission to a first output (40; 40A) in the scheduled or prioritised order, paging header generator means (32; 32A) for supplying a header to the paging messages constructed by the paging message construction unit (42; 42A) indicative of the type or priority of the accompanying paging message and feeding it to a second output (34; 34A) for onward transmission to a drift RNC, and reading means (36; 36A) operative when the RNC (12, 14) acts as a drift RNC to respond to signals received at a second input from a servicing RNC to read the headers of the paging messages and to direct the accompanying the paging message to the buffer unit (33; 33A) for onward transmission to the first output in the prioritized or scheduled order.

2. An RNC according to Claim 1, wherein said paging message construction unit (42; 42A) is operative to reconstruct a core network initiated paging message.

3. An RNC according to Claim 1 or to Claim 2, wherein said paging message construction unit (42; 42A) is operative to construct a signalling related paging message from signalling signals received from the core network (6) and packet related paging messages from packets of data received from the core network (6).

4. A UTRAN including a servicing RNC and a drift RNC, each according to Claim 1 or to Claim 2.

## Patentansprüche

1. Eine hiernach als RNC bezeichnete Funknetzsteuerung (12, 14) für ein Telekommunikationsnetz der dritten Generation mit einer Funkrufnachrichtenaufbaueinheit (42; 42A), die, wenn die RNC (12, 14) als bedienende RNC wirkt, den Aufbau oder Wiederaufbau von Funkrufnachrichten als Antwort auf an einem ersten Eingang (38; 38A) von einem Kernnetz (6) empfangene Funkrufsignale oder Daten bewirkt, **gekennzeichnet durch** Mittel (30, 30A) zum Planen oder Priorisieren der von der Aufbaueinheit (42; 42A) empfangenen Funkrufnachrichten und Zuführen derselben zu einer Puffereinheit (33; 33A) zur Weiterübertragung zu einem ersten Ausgang (40; 40A) in der geplanten oder priorisierten Reihenfolge, Funkrufkopfteilerzeugermittel (32; 32A) zum Zuführen eines Kopfteils zu den **durch** die Funkrufnachrichtenaufbaueinheit (42; 42A) aufgebauten Funkrufnachrichten, der die Art oder Priorität der begleitenden Funkrufnachricht anzeigt, und Abgeben desselben an einen zweiten Ausgang (34; 34A) zur Weiterübertragung zu einer Drift-RNC, und Lesemittel (36; 36A), die, wenn die RNC (12, 14) als Drift-RNC wirkt, auf an einem zweiten Eingang von einer bedienenden RNC empfangene Signale reagieren, um die Kopfteile der Funkrufnachrichten zu lesen und die begleitende Funkrufnachricht zur Puffereinheit (33; 33A) zur Weiterübertragung zum ersten Ausgang in der priorisierten oder geplanten Reihenfolge zu leiten.

2. RNC nach Anspruch 1, wobei die Funkrufnachrichtenaufbaueinheit (42; 42A) den Wiederaufbau einer vom Kernnetz eingeleiteten Funkrufnachricht bewirkt.

3. RNC nach Anspruch 1 oder Anspruch 2, wobei die Funkrufnachrichtenaufbaueinheit (42; 42A) den Aufbau einer zeichengabebezogenen Funkrufnachricht aus vom Kernnetz (6) empfangenen Zeichengabesignalen und paketbezogenen Funkrufnachrichten aus vom Kernnetz (6) empfangenen Datenpaketen bewirkt.

4. UTRAN mit einer bedienenden RNC und einer Drift-RNC jeweils nach Anspruch 1 oder Anspruch 2.

## Revendications

1. Contrôleur de réseau radio, ci-après désigné RNC, (12, 14) pour un réseau de télécommunications de troisième génération comprenant une unité de construction de messages d'appel unilatéral (42 ; 42A) qui, lorsque le RNC (12, 14) fonctionne en RNC de desserte, sert à construire ou à reconstruire des messages d'appel unilatéral en réponse à des signaux ou données d'appel unilatéral reçus au niveau d'une première entrée (38 ; 38A) depuis un réseau central (6), **caractérisé par** un moyen (30, 30A) pour ordonnancer ou classer par priorité les messages d'appel unilatéral reçus depuis l'unité de construction (42 ; 42A) et les fournir à une unité tampon (33 ; 33A) en vue de poursuivre leur transmission jusqu'à une première sortie (40 ; 40A) dans l'ordre d'ordonnancement ou de priorité, un moyen de génération d'en-têtes d'appel unilatéral (32 ; 32A) pour fournir un en-tête aux messages d'appel unilatéral construits par l'unité de construction de messages d'appel unilatéral (42 ; 42A) indicatif du type ou de la priorité du message d'appel unilatéral associé et le passer à une deuxième sortie (34 ; 34A) en vue de poursuivre sa transmission jusqu'à un RNC de dérive, et un moyen de lecture (36 ; 36A) fonctionnant quand le RNC (12, 14) fonctionne en RNC de dérive afin de répondre à des signaux reçus au niveau d'une deuxième entrée depuis un RNC de desserte afin de lire les en-têtes des messages d'appel unilatéral et de diriger les messages d'appel unilatéral associés à l'unité tampon (33, 33A) en vue de poursuivre leur transmission jusqu'à la première sortie dans l'ordre de priorité ou d'ordonnancement.

2. RNC selon la revendication 1, dans lequel ladite unité de construction de messages d'appel unilatéral (42 ; 42A) fonctionne pour reconstruire un message d'appel unilatéral lancé par un réseau central.

3. RNC selon la revendication 1 ou la revendication 2, dans lequel ladite unité de construction de messages d'appel unilatéral (42 ; 42A) fonctionne pour construire un message d'appel unilatéral relatif à la signalisation à partir de signaux de signalisation reçus depuis le réseau central (6) et des messages d'appel unilatéral relatifs à des paquets à partir de paquets de données reçus depuis le réseau central (6).

4. UTRAN comportant un RNC de desserte et un RNC de dérive, chacun selon la revendication 1 ou la revendication 2.
